# EUROPEAN PATENT APPLICATION

(11) **EP 1 679 172 A1**
(43) Date of publication of application: **12.07.2006**
(21) Application number: 05000387.0
(22) Date of filing: 11.01.2005
(51) Int. Cl.: B29C 45/14, G10K 11/00, B60R 13/08, B29C 70/70, B32B 15/08

(54) **A moulded plastic article having vibration damping properties and a method for preparation thereof**

(71) Applicant: Trelleborg Rubore Aktiebolag, 391 28 Kalmar (SE)
(72) Inventor: Josefsson, Percy, 391 80 Ljungbyholm (SE)
(74) Representative: Allee, Harriet Eva Charlotta

(57) **Abstract**

The present invention relates to a moulded plastic article (20) provided with a vibration damping structure (30), said structure being formed from a vibration damping laminate comprised of at least one metal layer (40) and at least one polymeric layer (50), which structure is moulded into the article when moulding the article. The invention also relates to a method of preparing such plastic article by providing the vibration damping structure (30) in a cavity of a mould, introducing a mouldable plastic material into the cavity and demoulding the moulded plastic article after settling of the plastic material.

## Description

### Field of the invention

The present invention relates to a moulded plastic article provided with a vibration damping structure, said structure being formed from a vibration damping laminate comprised of at least one metal layer and at least one polymeric layer, which structure is moulded into the article during the moulding of the article. The invention also relates to a method of preparing such plastic article by means of moulding.

### Background art

In the automotive industry, attempts are constantly being made to reduce the fuel consumption of commercial vehicles. Such attempts include the reduction of the weight of the vehicles. Accordingly, there is a tendency to produce automotive parts, such as engine parts, with thinner walls and/or in more light-weight materials. Consequently, there is also a tendency in the art to replace metal as a construction material with plastic in order to further reduce the weight. Parts having a reduced weight generally tend to vibrate, and as a result, the automotive industry is being faced with increasing problems of undesired vibrations and noise, mediated or generated by parts having reduced weight.

This is especially a problem in parts of the engine, the transmission, and the brake system. Vibration damping materials, such as those described in WO 03/022568, are presently used as so-called applied damping materials (ADM), which are applied onto specific areas of plastic and metal automotive parts by means of adhesive and/or mechanical means, in order to damp vibrations by absorbing and dissipating the vibration energy, thereby reducing the noise emanating from the vibrating part. The applied damping material is often in itself a so-called constrained layer type of damping material, or forms a constrained layer damping material when applied to the surface of the specific part.

There are, however, drawbacks of the prior art such as the risk of delamination and de-attachment of the applied damping material, and thus loss of the desired vibration damping action.

In the case of a moulded plastic article provided with a vibration damping structure formed of a laminate comprising at least one metallic layer and one polymeric layer, these drawbacks can be overcome by the features of the characterising part of claim 1.

### Summary of invention

According to the invention the vibration damping structure is moulded into the plastic article during the moulding of the article, i.e. already at the stage of forming the plastic article by means of moulding, such as injection moulding.

The moulded plastic articles according to the invention are especially automotive parts, such as various panels and housings, for example oil pans, engine housings, cam housings , and chain drive housings, transmission covers, valve or cam covers, and inlet manifolds. Of course, other plastic articles or parts will suggest themselves to the skilled reader after having read this description.

Generally, the specific type of moulding used for forming such articles is injection moulding.

The damping structure(s) can be located at any desired position(s) within the plastic article. The desired position(s) can easily be determined by the person skilled in the art using testing methods conventionally used in the ADM art.

The method of the present invention will also facilitate the production of a moulded plastic article provided with a vibration damping structure.

The invention will be more fully understood with reference to the detailed description and drawings provided in the following.

### Brief description of the drawings

Figure 1 shows a valve cover 10 comprising a plastic article 20 into which a laminate vibration damping structure 30 is moulded.
Figure 2 shows an alternative embodiment of the valve cover 10 of Figure 1, wherein a portion of the vibration damping structure 30 remains not covered by the plastic material.
Figure 3 shows a further alternative embodiment of the valve cover 10 of Figure 1, wherein the laminate structure is provided with holes 35, occupied by the plastic material of the moulded article.

### Detailed description of the invention

By means of the method of the present invention, the process of preparing a moulded plastic article provided with a vibration damping structure, which structure is formed from a laminate comprising at least one metallic layer and one polymeric layer, can be considerably facilitated in that the damping structure is integrated into the plastic article simultaneously with the moulding thereof.

The inventive method generally comprises the following step: providing the vibration damping structure in a cavity of a mould, which cavity is shaped to conform with the shape of the article to be produced, introducing a mouldable plastic material into the cavity, and, demoulding the moulded plastic article after settling of the plastic material.

Also, in of the present method, the laminate structure is brought into a more intimate contact with the plastic material than in the prior art ADM methods, since the molten plastic will conform to the surface and any surface roughness of the laminate structure during the moulding, thereby increasing the effective contact surface area as compared to the prior art ADM technique.

While no limitation to any specific theory is intended, it is believed that the damping effect of a given laminate structure is dependent upon the effective contact surface area and thus, that an improved contact of the laminate with the plastic will improve the damping effect of the laminate structure as compared to that of a similar laminate structure used in the prior art ADM technique.

The moulded plastic articles according to the invention are especially automotive parts, such as various panels and housings, for example oil pans, engine housings, cam housings, and chain drive housings, transmission covers, valve or cam covers, and inlet manifolds. Generally, the specific type of moulding used for forming such articles will be injection moulding.

The plastic material is not critical and can be selected from those conventionally used for the specific application. Such materials can any mouldable thermoplastic material conventionally used in the art, such polyamide (PA), polyetylene (PE), polypropylene (PP), polyphenylene-sulphide (PPS), or acrylonitrile-butadiene-styrene (ABS) plastic.

Typically, the damping laminate material to be moulded into the plastic article will comprise at least one metallic layer and at least one polymeric layer.

The metal layer(s) of the laminate will typically be made from aluminium, stainless steel, or steel, such as cold rolled sheet steel. In a case where rust protection is desired the laminate may be made from galvanized steel. Any conventional surface protection may be used, such as galvanized steel or aluminized steel.

Any constrained layer damping (CLD) material known in the art, or any damping material which would form a CLD material on application to a plastic surface, can be used in practising the invention. Such materials have been described in e.g. WO 93/ 13329, WO 95/29333, WO 95/29060, WO 96/30205 and WO 03/022568. Conventionally, these materials are in the form of laminates comprising at least one metallic layer and at least one polymeric layer. Specific examples of noise damping laminates are those sold by the company Trelleborg Rubore AB, Trelleborg, Sweden under the designations Duru-Lam, Rub-Lam, Visco-Lam and ADM.

Such materials are presently used in the automotive industry as noise damping shims and insulators, such as for example in the braking system of commercial vehicles, and also as applied damping materials.

Examples of other vibration damping laminate products which can be used as the laminate structure are those sold under the designation Antiphon by Collins & Aikman, Quite Steel by MSC (Material Science Corporation), Bondal by Thyssen Krupp, and Solconfort by Arcelor.

In the embodiments shown in the drawings, a vibration damping laminate product, ADM 512442, provided by Trelleborg Rubore AB, Sweden, has been used, corresponding to reference numeral 30. The laminate comprises a total of four layers of alternating metal layers 40 and polymeric layers 50. The polymeric layers 50 are formed from NBR rubber and the metal layers 40 are formed from galvanized steel.

The suitable geometrical shape of the damping material structure to be moulded into the specific article, as well as the proper position of the laminate structure can be determined by means of methods conventionally used in the art of the ADM technique. Such methods can, for example, on measuring the amplitude of the vibrations of different areas of the specific plastic article while subjecting the article to vibrations of a certain frequency. The amplitude is then compared to measurements on the article provided with a damping material structure, attached to a certain portion of the surface thereof. Once a suitable surface position and a suitable geometrical shape of the damping material structure have been established, the position, i.e. the depth, of the damping material structure in the moulded plastic article is not considered to be critical and can be selected based on practical and design considerations.

By embedding the laminate structure in the plastic material a larger surface area of said structure will be brought into contact with the plastic material than in the prior art ADM methods. It is believed that an increased contact surface area will improve the damping efficiency of the laminate structure.

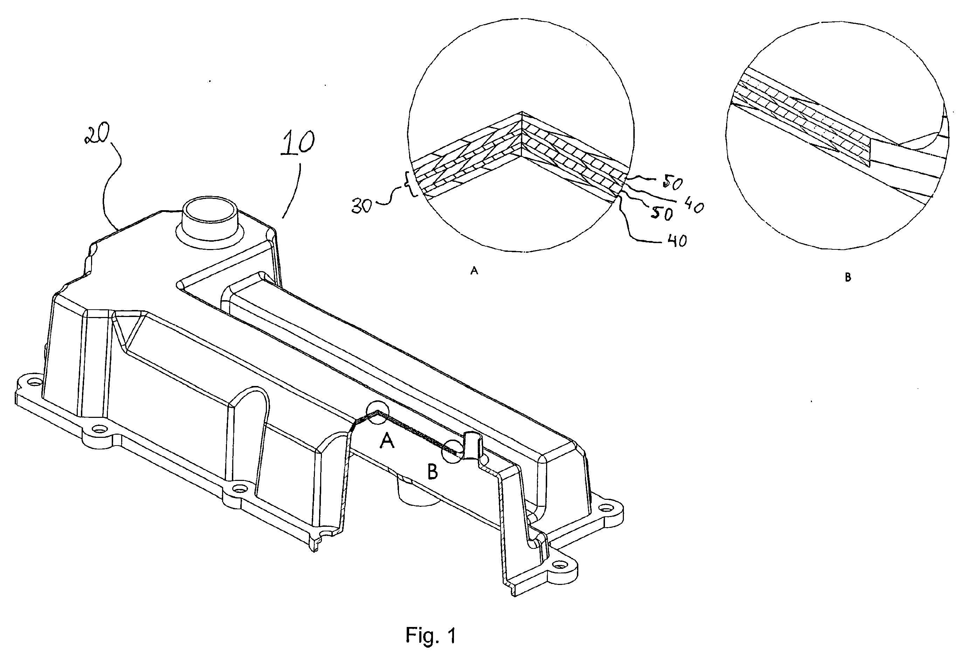

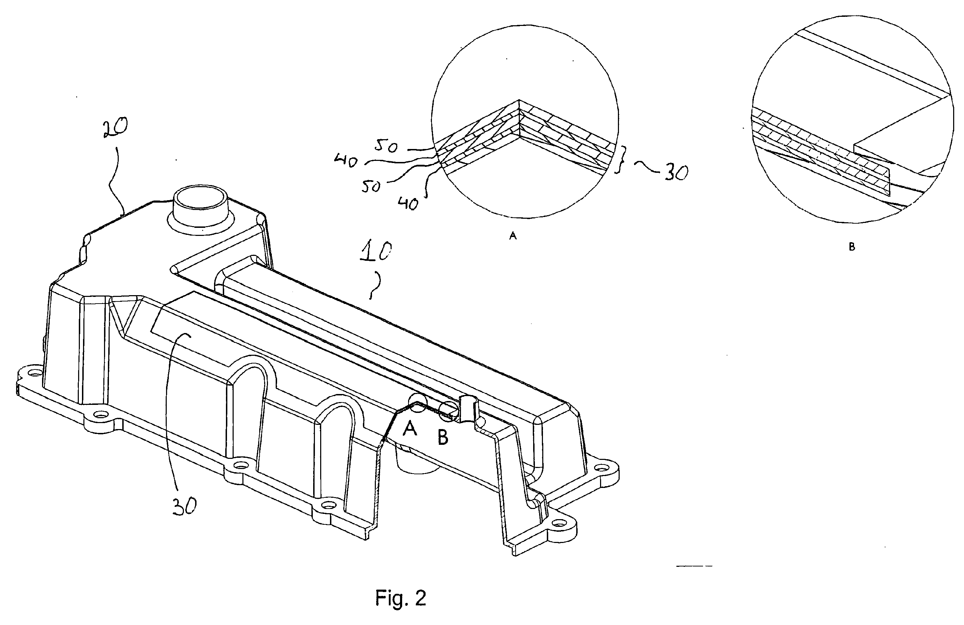

While, for the purpose of minimising the risk of delamination and de-attachment of the damping material structure, it is preferred that the structure be embedded in the plastic material of the article, such as shown in Figure 1, it is also possible to leave a portion of a surface thereof not covered by the plastic material such as shown in Figure 2. As will be obvious to the person skilled in the art such non-covered surfaces can be provided with visible information, or may in itself form visible information or other aesthetic features. When a portion of a surface of the damping material structure is not covered, it is preferred that the edges, or the circumferential area of said surface is embedded in the plastic material.

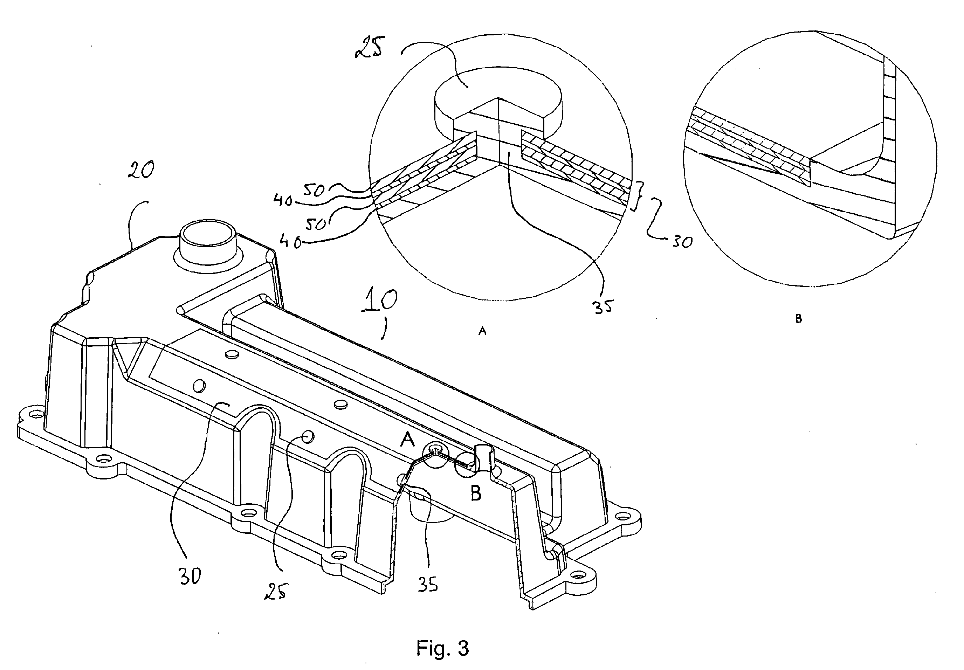

In order to increase the integrity, durability and strength of the moulded plastic article provided with the damping structure of the invention, the laminate structure could be provided with one or more holes essentially normal to the surface thereof, which holes will be filled by the plastic material, thus further securing the structure in the desired position in the moulded article. Such an embodiment is shown in Figure 3, wherein reference numeral 35 designates such hole. As will be obvious to the person skilled in the art, the portion(s) 25 may for example be shaped so as to form visible information, or other aesthetic features. The laminate structure in the embodiment shown in Figures 1 and 2 can of course also be provided with holes, such as for example shown in Figure 3.

While the present invention is primarily directed to automotive plastic articles, it is also conceivable to apply the method of the invention in the production of other plastic articles also subjected to considerable vibrations during use, such as for example plastic panels in washing machines, dish washers, tumble dryers, refrigerators and other household appliances.

## Claims

1. A moulded plastic article (20) provided with a vibration damping structure (30), said structure being formed from a laminate comprising at least one metallic layer (40) and at least one polymeric layer (50), **characterised in that** the structure is moulded into the article.

2. The moulded plastic article according to claim 1, **characterised in that** the article is an automotive part.

3. The moulded plastic article according to claim 1 or 2, **characterised in that** the article is a part selected from the group consisting of oil pans, engine housings, cam housings, chain drive housings, transmission covers, valve or cam covers, and inlet manifolds.

4. Method of producing a moulded plastic article (20) provided with a vibration damping structure (30), said structure being formed from a laminate comprising at least one metallic layer (40) and at least one polymeric layer (50), **characterised in** the following steps:
providing the vibration damping structure (30) in a cavity of a mould, the cavity being shaped to conform with the shape of the article to be produced,
introducing a mouldable plastic material into the cavity, and,
demoulding the moulded plastic article after settling of the plastic material.

5. Method of claim 4, **characterised in that** the method of producing the moulded article is injection moulding.
